# EUROPEAN PATENT APPLICATION

(11) **EP 1 964 914 A1**
(43) Date of publication of application: **03.09.2008**
(21) Application number: 08001174.5
(22) Date of filing: 23.01.2008
(51) Int. Cl.: C12G 1/02

(54) **Wine-making plant and method**

(30) Priority: 14.02.2007 IT PC20070012
(71) Applicant: CMB di Cassi Angelo & C. S.n.c., 29010 Pianello V.T. PC (IT)
(72) Inventor: Corrada, Valter, 29010 Pianello Val Tidone (PC) (IT)
(74) Representative: La Ciura, Salvatore

(57) **Abstract**

This invention relates to a wine-making plant comprising:
- a wine-making unit, consisting of a large tank designed to hold the must and the marc;
- a second tank, separate from the wine-making unit and connected to the lower part thereof via a pipe fitted with a closing and opening valve;
- an always-open pipe that connects the upper part of said second tank to the upper part of the wine-making unit;
- a pump fitted to a pipe which connects the lower part of said second tank to the upper part of the wine-making unit, and
- valve means designed to place the upper part of the wine-making unit in communication with the atmosphere.

The invention also relates to a method wherein:
- part of the must is transferred from the wine-making unit to an external tank and from there to the upper part of the wine-making unit under higher pressure than the external pressure, so that the marc is soaked from above;

the gas present in the upper part of the wine-making unit is discharged so that the carbon dioxide dissolved in the must rises rapidly, disintegrating the cap formed by the marc and drawing with it the lees present in the must, so that the lees remain trapped in the marc, which re-forms the cap.

## Description

This invention relates to a wine-making plant comprising:
- a wine-making unit, consisting of a large tank designed to hold the must and the marc;
- a second tank, separate from the wine-making unit and connected to the lower part thereof via a pipe fitted with a closing and opening valve;
- an always-open pipe that connects the upper part of said second tank to the upper part of the wine-making unit;
- a pump fitted to a pipe which connects the lower part of said second tank to the upper part of the wine-making unit, and
- valve means designed to place the upper part of the wine-making unit in communication with the atmosphere.

The invention also relates to a method wherein:
- part of the must is transferred from the wine-making unit to an external tank and from there to the upper part of the wine-making unit under higher pressure than the external pressure, so that the marc is soaked from above;
- the gas present in the upper part of the wine-making unit is discharged so that the carbon dioxide dissolved in the must rises rapidly, disintegrating the cap formed by the marc and drawing with it the lees present in the must, so that the lees remain trapped in the marc, which re-forms the cap.

The plant according to the invention could also easily be made by exploiting existing wine-making units, with no need to replace them with new equipment. It allows the marc to be soaked effectively, disintegrating the cap formed by the marc with no need for mechanical means which, by breaking up the marc, would facilitate the transfer into the must of substances that would adversely affect the quality of the end product.

Finally, this system causes part of the lees to adhere to the marc and remain trapped in the cap, thus reducing the quantity of lees subsequently transferred with the must into the tanks where fermentation is completed.

As those skilled in the art are aware, one of the most important stages of wine-making is fermentation. According to the latest techniques, fermentation takes place in tanks known as "fermenters", into which the must is introduced for a certain time together with the marc, so that the liquid can extract from the marc the tannins and other substances required to give the wine its final organoleptic properties.

In order for this to happen, the marc, which tends to rise to the surface, forming a "cap", must always be kept wet and immersed in the must.

For this reason, fermenters are fitted with means which cyclically pick up must from the bottom of the tank and pour it on the marc, so that the marc always remains wet.

However, these systems involve two problems.

The first is that the cap consists of a rather compact layer, so that the must that falls from above is unable to soak all the marc, but tends to seep to the lower part through cracks and passages formed in the compact floating layer.

The second problem is that when the must is transferred to an external tank to complete its fermentation after a few days in the fermenter, large quantities of the lees which are deposited on the bottom pass into said tank, where they continue to release substances that cause the quality of the wine to deteriorate.

The problem of keeping the marc constantly wet has been solved in various ways.

In some cases the fermenters are fitted with a mechanical arm at the top which disintegrates the cap, so that the marc always remains completely soaked.

However, this system presents the drawback of breaking up the marc, which therefore releases into the must substances that can adversely affect its quality.

The wine-making unit forming the subject of European patent no. 959,127 filed by the same applicant illustrates a fermenter wherein the pressure of the gas that develops during fermentation is exploited to transfer part of the must to an upper tank, from which it falls onto the marc. When a relief valve is opened in the upper part of the wine-making unit, the sudden reduction in pressure causes all the carbon dioxide dissolved in the must to rise at the same time, creating a plurality of bubbles that disintegrate the cap, soaking the marc without the use of mechanical means, and consequently without breaking it.

European patent application no. 1,314,778 describes a wine-making plant and method wherein part of the must is transferred from a fermenter to an external tank, said tank is hermetically sealed until a pre-determined pressure is reached inside it, said tank is then placed in communication with the upper part of the wine-making unit to transfer the must from said tank to the wine-making unit in order to wet the marc from above, the communication between said tank and the wine-making unit is closed, and a second communication is simultaneously opened between said tank and the lower part of the wine-making unit so that the pressurised gas still present in the tank penetrates into the wine-making unit and rises through the must, breaking up the cap without exerting any mechanical action on the marc, which is completely soaked but remains intact.

However, the methods and equipment described above do not solve the problem of lees, as they do not effectively separate the lees from the must; an excessive part of the lees is therefore transferred to the next tank, where fermentation is completed.

Moreover, various problems remain which often prevent existing plants from being adapted to these new techniques because, especially with large wine-making units, in order to push the must up to the upper part of the wine-making units, a fairly high pressure would be required, which wine-making units made of thin sheet steel would often be unable to withstand without buckling.

The problems described above are now solved by the present invention, which relates to a wine-making plant wherein an outer tank is connected to the wine-making unit via a pipe fitted with a closing valve, and which includes: an always-open pipe that connects the upper parts of the tank to the wine-making unit; a pump that conveys the must from the tank to the upper part of the wine-making unit; and an opening valve, which allows the pressure in the wine-making unit to be released.

This system allows the must to be transferred from the tank to the upper part of the wine-making unit under isobaric conditions, at a limited pressure, and ensures that subsequently, when this pressure is released, the gas dissolved in the must rises and disintegrates the cap, drawing with it the must, which wets the marc, and the lees, much of which remains trapped in the marc, thus preventing the lees from being transferred with the must to the tank where fermentation is completed.

This invention will now be described in detail, by way of example but not of limitation, by reference to the annexed figures wherein:
- figure 1 schematically illustrates a plant according to the invention;
- figures 2 to 5 schematically illustrate the plant according to the invention during the various stages of the wine-making cycle.

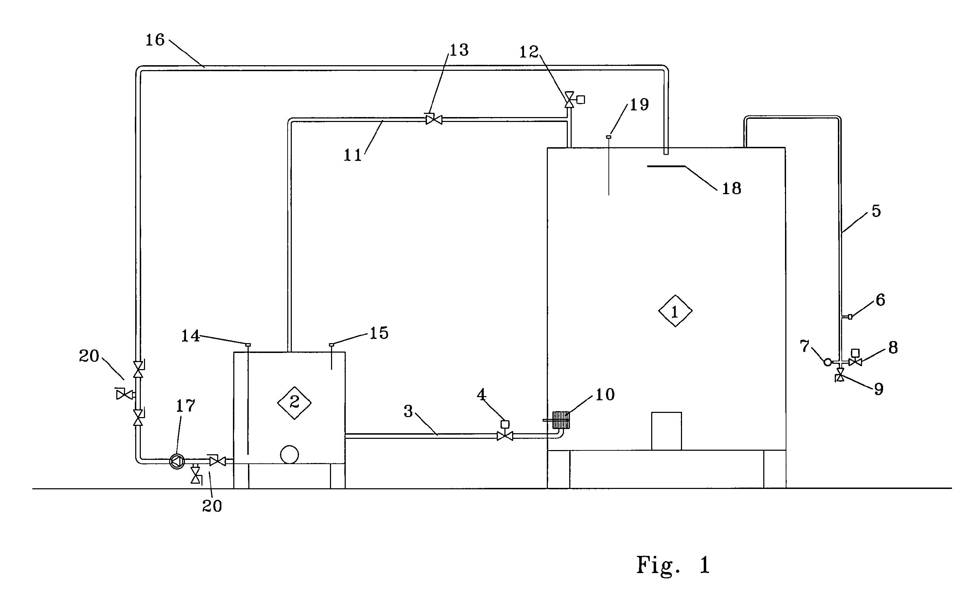

In figure 1, no. 1 indicates a wine-making unit consisting of a tank of suitable dimensions, while no. 2 indicates a separate tank, connected to the lower part of tank 1 via a pipe 3 fitted with a closing valve 4.

A pipe 5, leading to the upper part of tank 1, is fitted with a probe 6 that detects the pressure in the wine-making unit, a pressure gauge 7 that indicates the pressure measured, and one or two valves 8 and 9, the first of which is controlled by a PLC or other plant control system, while the second is controlled manually.

Pipe 5 with valves 8 and 9 is not essential to the operation of the plant, but is useful to start the cycle with initial protection by inert gas, especially when white grapes are macerated and it is preferable to prevent contact between the must and the air.

A grid 10, fitted at the end of pipe 3 leading to wine-making unit 1, allows the must to flow into the pipe to reach tank 2, while any marc is trapped.

Grid 10 is fitted with means designed to remove the marc from the surface, thus keeping the grid clean, and is preferably of the type illustrated in European patent no. 1,308,503 filed by the same applicant.

A pipe 11, which is always open, connects the upper part of tank 2 to the upper part of wine-making unit 1. A relief valve 12 places the interior of the wine-making unit and tank 2 in contact with the atmosphere.

Valve 12 is illustrated on a branch of pipe 11, but could also be located on the upper wall of the wine-making unit or another suitable place.

A valve 13, also illustrated on pipe 11, is a service valve and could be omitted, as it is designed to remain always open during the use of the plant.

Tank 2 is fitted with a pair of probes 14 and 15, which detect the minimum and maximum levels respectively of the must in the tank.

A further pipe 16, fitted with a pump 17, connects the lower part of tank 2 with the upper part of wine-making unit 1.

A grid or the like 18, designed to distribute the must conveyed from pipe 16 over the inner surface of the wine-making unit, and a probe 19 which indicates when the maximum level of crushed grapes is reached in the wine-making unit, are also fitted here.

Finally, pipe 16 may be fitted with a series of service valves 20.

The plant operates as follows.

When the must and the marc have been loaded into wine-making unit 1, pressure probe 6 is regulated according to the maximum pressure required in the plant; said pressure must be such that it does not cause the structure of the wine-making unit to buckle, so that existing wine-making units, not specifically designed for use with the method according to the invention, can be used in the plant.

The must in the wine-making unit starts to ferment, developing carbon dioxide, which causes the pressure in the plant to rise to the pre-set value, regulated by a PLC via probe 6.

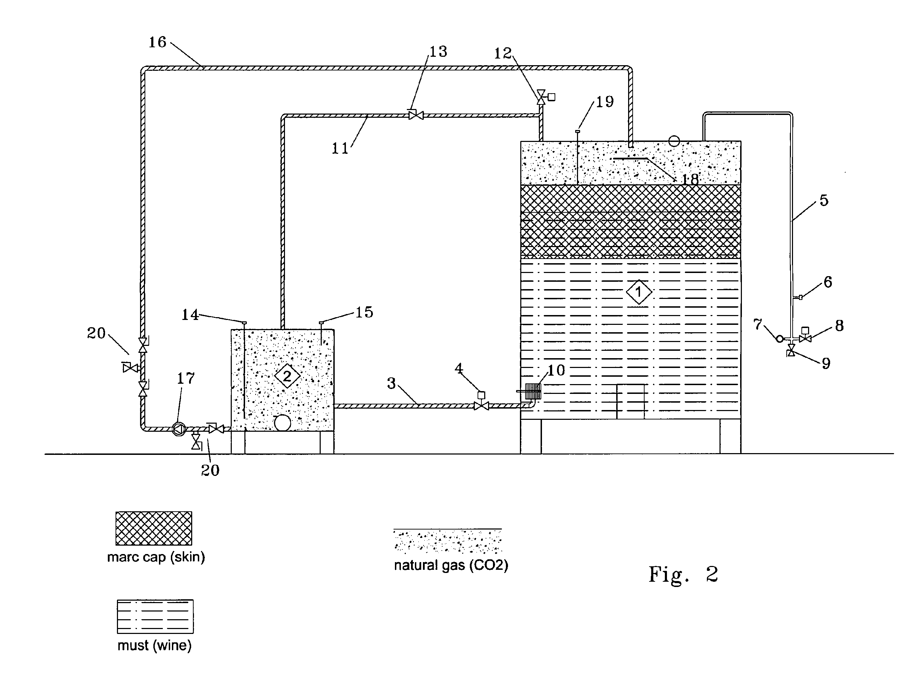

At this stage the plant is in the state shown in figure 2: the must fills wine-making unit 1, the marc rises to the surface and clusters to form the "cap", and the gas developed during fermentation fills the upper part of the fermenter, pipes 16 and 11 and, via pipe 11, tank 2.

The process is started and the control system, having established via probe 14 that tank 2 is empty, enables the opening of valve 4 and the closing of valve 12.

The must then begins to flow through pipe 3 to tank 2.

During this stage the grid-cleaning systems are activated to ensure that marc or other bodies present in the must do not clog the grid, preventing the passage of the must.

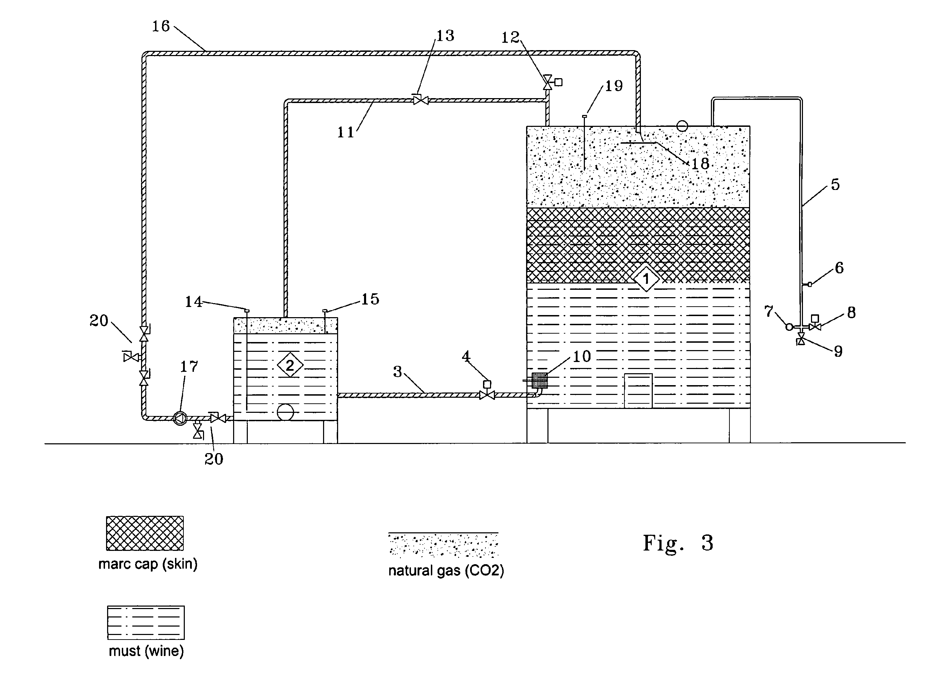

When the liquid in tank 2 reaches probe 15 designed to detect when the maximum level in the tank is reached (fig. 3), the control system closes valve 4 and, with valve 12 always closed, starts up pump 17. Pump 17 sucks liquid from the bottom of tank 2 and conveys it along pipe 16 towards the upper part of fermenter 1.

This transfer, known as "pumping-over", is perfectly isobaric, because pipe 11 always keeps the connection between wine-making unit 1 and tank 2 open.

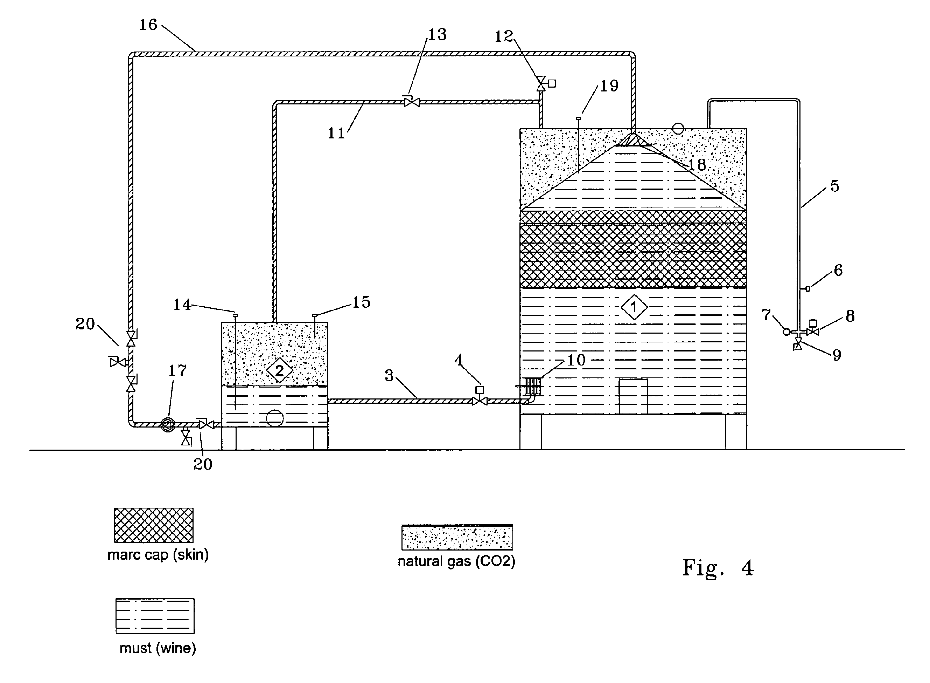

The must conveyed by pump 17 along pipe 16 falls onto grid 18, and from there is sprinkled over the upper surface of the cap formed by the marc, which grows heavier as it is wetted, until it is completely covered with must (figure 4).

Pump 17 continues to operate until no must remains in tank 2. This situation is detected by probe 14 which, via the plant control system, enables the opening of valve 4 so that the must in the wine-making unit flows into the tank again until it is full, and then begins a further stage of pumping-over and wetting of the marc.

This wetting or pumping-over cycle is repeated a pre-determined number of times.

At the end of the last of these cycles, when tank 2 has emptied for the last time and probe 14 does not detect any liquid, pump 17 shuts down, and the control system closes valve 4 and opens relief valve 12. All the pressure in wine-making unit 1 and tank 2 is then released to the exterior.

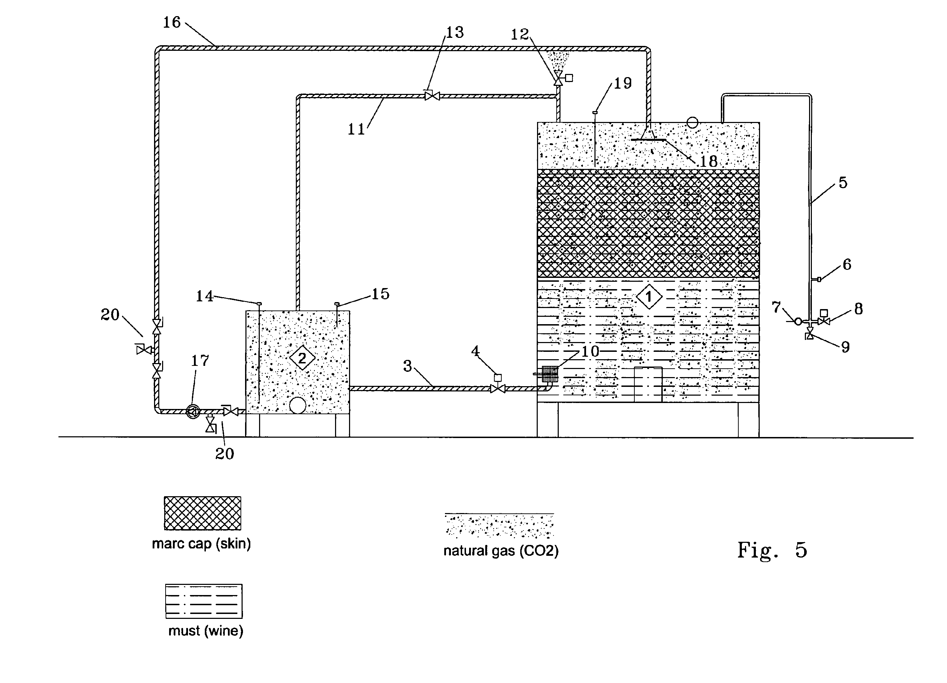

After the pressure reduction in the wine-making unit, the gas dissolved in the must rises, forming thousands of bubbles which disintegrate the cap, separating the marc without breaking it; the marc is dispersed in the must, and is completely soaked (fig. 5).

Moreover, all this gas which moves upwards carries with it particles of lees, which adhere to the marc and are trapped in the interstices of the cap. Thus when the must is transferred to a further tank (not illustrated in the figure) to complete the fermentation at the end of the various fermentation cycles, it draws with it a much smaller amount of lees than is the case with known equipment, because the majority of the lees remains trapped in the cap, which is discarded or used for other purposes.

The tests conducted demonstrate that the amount of lees that remains trapped among the marc in the cap can reach a large proportion of the total quantity. This is a very important result, because it means that the quantity of undesirable substances normally present in wine is drastically reduced.

In the case of fermentation in a protected atmosphere, the cycle is identical to the one just described, except that a certain amount of inert gas is introduced into the plant at the start through valve 8 and pipe 5, to prevent the must from coming into contact with the atmosphere.

Moreover, the fact that pumping-over is performed with a pump under isobaric conditions means that it is possible to operate at pressures much lower than those reached when the pressure of the carbon dioxide developed during fermentation is exploited for pumping-over. This allows plants to be made on the basis of existing fermenters which, not being specifically designed for this purpose, have a structure that would be liable to buckle under the higher pressures reached if pumping-over were effected by exploiting the pressure of the gas.

Thus an existing wine-making unit can be converted into a plant according to the invention merely by adding external tank 2 and the associated connecting pipes.

The plant according to the invention produces excellent results because:
- the cap is disintegrated and the marc is stirred by exploiting the gas bubbles that develop in the must, without using mechanical agitation systems which would break up the marc, leading to a deterioration in the organoleptic quality of the wine;
- the majority of the lees, which would otherwise be transferred with the must into the subsequent tanks in which fermentation is completed, are trapped in the cap, among the marc;
- it can be made by adding a few components to existing fermenters, with no need to build new ones.

An expert in the field could devise various modifications and variations, all of which should be deemed to fall within the ambit of this invention.

## Claims

1. Wine-making plant **characterised in that** it comprises:
• a wine-making unit (1) constituted by a tank designed to contain the must with the marc;
• a tank (2) separate from said wine-making unit;
• a pipe (3) with a closing valve (4), which connects the lower part of said wine-making unit (1) to said tank (2);
• an always-open pipe (11) which connects the upper part of tank (2) with the upper part of wine-making unit (1);
• a pipe (16) with a pumping-over pump (17), which connects said tank (2) with the upper part of wine-making unit (1);
• means (12) designed to discharge the pressure present in wine-making unit (1) and tank (2).

2. Wine-making unit as claimed in claim 1, **characterised in that** it includes pressure-limiting means constituted by a pressure detector (6) connected to the control system of the plant.

3. Wine-making plant as claimed in claim 2, **characterised in that** it includes means (5, 8) designed to introduce an inert gas into the plant.

4. Wine-making plant as claimed in any of the preceding claims, **characterised in that** it includes, at the inlet of pipe (3) which connects wine-making unit (2) to tank (1), a filtration grid (10) fitted with means designed to stir the marc and prevent the grid from becoming clogged.

5. Wine-making plant as claimed in any of the preceding claims, **characterised in that** said tank (2) is fitted with sensors (14, 15) designed to detect the minimum and maximum levels of must therein and to send consequent signals to the control system of the plant.

6. Plant **characterised in that** it includes, in the upper part of wine-making unit (1), means (18) designed to spread the must which enters wine-making unit (1) from above over the entire surface of the cap.

7. Wine-making method **characterised in that** it comprises one or more stages wherein:
• the marc is soaked by wetting it from above with must in an environment at a pressure greater than atmospheric pressure;
• the upper part of the wine-making unit is then placed in communication with the atmosphere, so that the pressure is discharged and the gas dissolved in the must rises, disintegrating the cap and drawing the must and lees with it, towards the marc.

8. Wine-making method as claimed in claim 7, wherein the pumping-over is performed under isobaric conditions.

9. Wine-making method as claimed in claims 7 and 8, **characterised in that** it includes the following stages:
• part of the must is transferred, through a pipe (3) fitted with closing means (4), from wine-making unit (1) to a separate tank (2), the upper part of which communicates with the upper part of the wine-making unit via a pipe (11) which is always open, all passages (12) which place said tank (2) and said wine-making unit (1) in communication with the exterior being closed;
• when the must in said separate tank (2) reaches a pre-determined level, the communication between said tank (2) and said wine-making unit (1) is closed, and the must is transferred from said tank to the upper part of said wine-making unit via a third pipe (16) fitted with a pump (17), and wets the marc in the wine-making unit from above;
• when the level of must in tank (2) reaches a pre-determined minimum value, the passage between said wine-making unit (1) and said tank (2) reopens, and the tank-filling and must pumping-over stages are repeated for one or more cycles;
• on completion of a pre-determined number of marc wetting cycles the connection between said tank and said wine-making unit is closed, the pump is shut down, and the interior of said wine-making unit and said tank are placed in communication with the atmosphere to release the pressure and cause the gas dissolved in the must to rise.
